Europäisches Patentamt

European Patent Office

Office européen des brevets

(11) Veröffentlichungsnummer: **0 069 829**
**B1**

(12) **EUROPÄISCHE PATENTSCHRIFT**

(45) Veröffentlichungstag der Patentschrift:
**14.08.85**

(51) Int. Cl.⁴: **H 04 L  11/16,** G 06 F  13/00

(21) Anmeldenummer: **82103162.2**

(22) Anmeldetag: **15.04.82**

(54) **Bussystem.**

(30) Priorität: **10.07.81  CH 4529/81**

(43) Veröffentlichungstag der Anmeldung:
**19.01.83 Patentblatt 83/3**

(45) Bekanntmachung des Hinweises auf die Patenterteilung:
**14.08.85 Patentblatt 85/33**

(84) Benannte Vertragsstaaten:
**CH DE GB IT LI NL**

(56) Entgegenhaltungen:
**DE - A - 2 531 921**
**DE - A - 3 043 894**

(73) Patentinhaber: **SIEMENS-ALBIS AKTIENGESELLSCHAFT, EGA1/Verträge und Patente Postfach, CH-8047 Zürich (CH)**

(72) Erfinder: **Hofstetter, Matthias, St. Galler Strasse 108, CH-9230 Flawil (CH)**

## Beschreibung

Die vorliegende Erfindung betrifft ein Bussystem nach dem Oberbegriff des Patentanspruches 1.

Ein Bussystem dieser Art ist beispielsweise aus der DE-OS 2531921 bekannt. In diesem Bussystem besteht die Multiplexer-Einheit aus einem Multiplexer, die Pufferschaltung aus mehreren individuellen Puffern und der Koppler aus mehreren Duplexern, wobei die Untereinheiten konventioneller Art sind. Der radiale Aufbau eines solchen Bussystems ermöglicht eine Datenübertragung mit einer relativ grossen Flexibilität.

Bei einem solchen Bussystem stellt sich die Aufgabe, insbesondere die Untereinheiten so zu gestalten, dass das Bussystem eine erhöhte Flexibilität aufweist, wenig aufwendig ist und eine grosse Sicherheit bei der Übertragung von Daten gewährleistet.

Zur Lösung dieser Aufgabe stehen selbstverständlich Elemente zur Verfügung, wie sie oft in solchen Bussystemen verwendet werden. So ist beispielsweise aus der DE-OS 3043894 die Anwendung von Mikroprozessoren, Parallel-Serien-Wandlern, Serien-Parallel-Wandlern und/oder Manchester-Umsetzen in solchen Bussystemen bekannt. Diese Aufgabe wird erfindungsgemäss durch ein Bussystem mit den im kennzeichnenden Teil des Patentanspruches 1 angegebenen Merkmalen gelöst.

Die eigentümliche Gestaltung des Bussystems, insbesondere der Untereinheiten, bringt den Vorteil mit sich, dass die Länge der Datenwörter sowie die Geschwindigkeit von Änderungen der durch die Daten dargestellten Angaben sehr unterschiedlich sein kann.

Andere vorteilhafte Ausgestaltungen der Erfindung sind in weiteren Ansprüchen angegeben.

Im folgenden wird ein Ausführungsbeispiel der Erfindung anhand von Zeichnungen näher beschrieben. Es zeigt:

Fig. 1 das Blockschaltbild eines Bussystems nach der Erfindung,

Fig. 2 das Blockschaltbild der Schnittstellenschaltung eines solchen Bussystems,

Fig. 3 das Blockschaltbild einer Untereinheit des Bussystems,

Fig. 4 das Blockschaltbild eines Wandlers dazu, und

Fig. 5 ein Ausschnitt aus Fig. 1 mit einer zusätzlichen parallelgeschalteten Untereinheit.

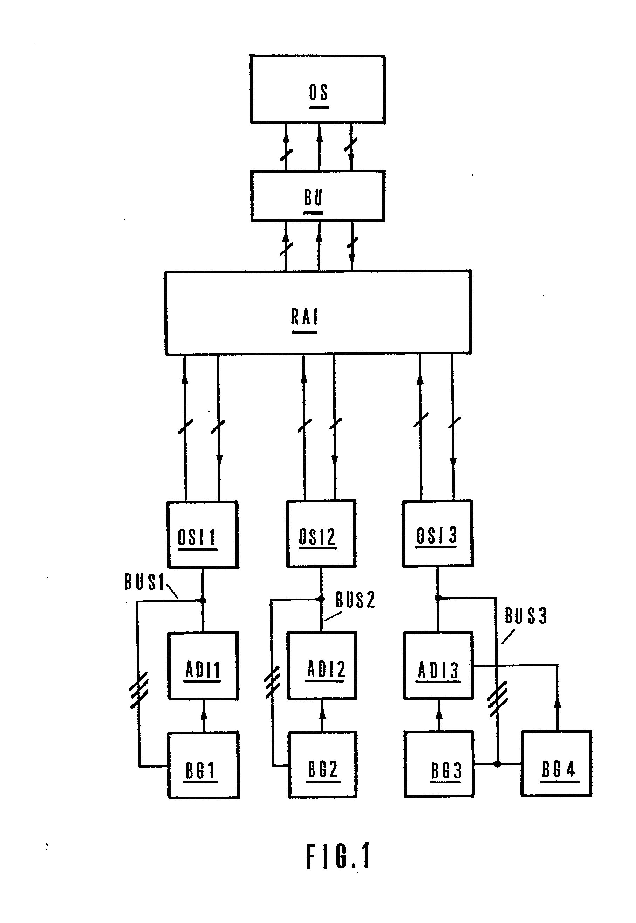

Das Bussystem nach Fig. 1 weist eine mittels einer Sammelleitung über einen Puffer BU mit einer Zentralstelle OS verbundene Schnittstellenschaltung RAI auf, an die über weitere Sammelleitungen je eine Untereinheit OSI1, OSI2 und OSI3 angeschlossen ist, die je über eine Sammelschiene oder einen sogenannten Bus (BUS1 bzw. BUS2) mit einem Wandler ADI1, ADI2 bzw. ADI3 und einer Baugruppe BG1, BG2 bzw. BG3 verbunden sind, wobei die Baugruppe BG3 über den ihr zugeordneten Bus (BUS3) an einer weiteren Baugruppe BG4 angeschlossen ist. Die Baugruppen BG1 und BG2 sind über je eine weitere Verbindung mit einem Wandler ADI1 bzw. ADI2 und die Baugruppen BG3 und BG4 mit einem Wandler ADI3 verbunden.

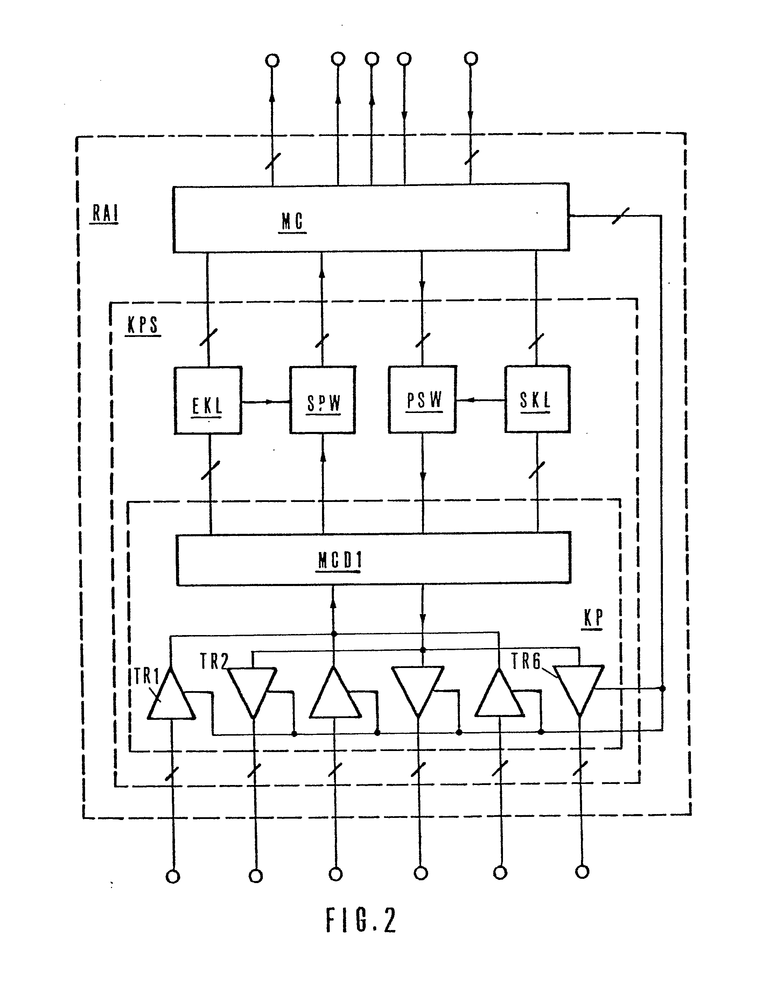

Die Schnittstellenschaltung RAI nach Fig. 2 weist einen über die Sammelleitungen mit dem Puffer BU (Fig. 1) verbundenen Mikrocomputer MC sowie einen über die weiteren Sammelleitungen mit den Untereinheiten OSI1, OSI2, OSI3 (Fig. 1) verbundenen Koppler KP auf, der mit einem Manchester-Umsetzer MCD1 und mit sechs Treibern TR1, TR2, ..., TR6 versehen ist, die über eine Sammelleitung einzeln vom Mikrocomputer gesteuert werden. Es könnten aber ebensogut mehr als sechs Treiber sein.

Der Mikrocomputer MC ist mit Hilfe von bidirektionalen Sammelleitungen über eine Empfangs-Kontroll-Logik EKL mit dem Manchester-Umsetzer MCD1 verbunden. Die Kontroll-Logik EKL steuert einen Serien-Parallel-Wandler SPW, der über Sammelleitungen sowohl an den Mikrocomputer MC als auch an den Manchester-Umsetzer MCD1 angeschlossen ist. Der Mikrocomputer MC ist ausserdem mit Hilfe von bidirektionalen Sammelleitungen über eine Sende-Kontroll-Logik SKL mit dem Manchester-Umsetzer MCD1 verbunden, wobei die Kontroll-Logik SKL einen Parallel-Serien-Wandler PSW steuert, der über Sammelleitungen sowohl an den Mikrocomputer MC als auch an den Manchester-Umsetzer MCD1 angeschlossen ist. Dabei bilden die Elemente SPW, EKL, SKL, PSW und KP eine Koppelschaltung KPS.

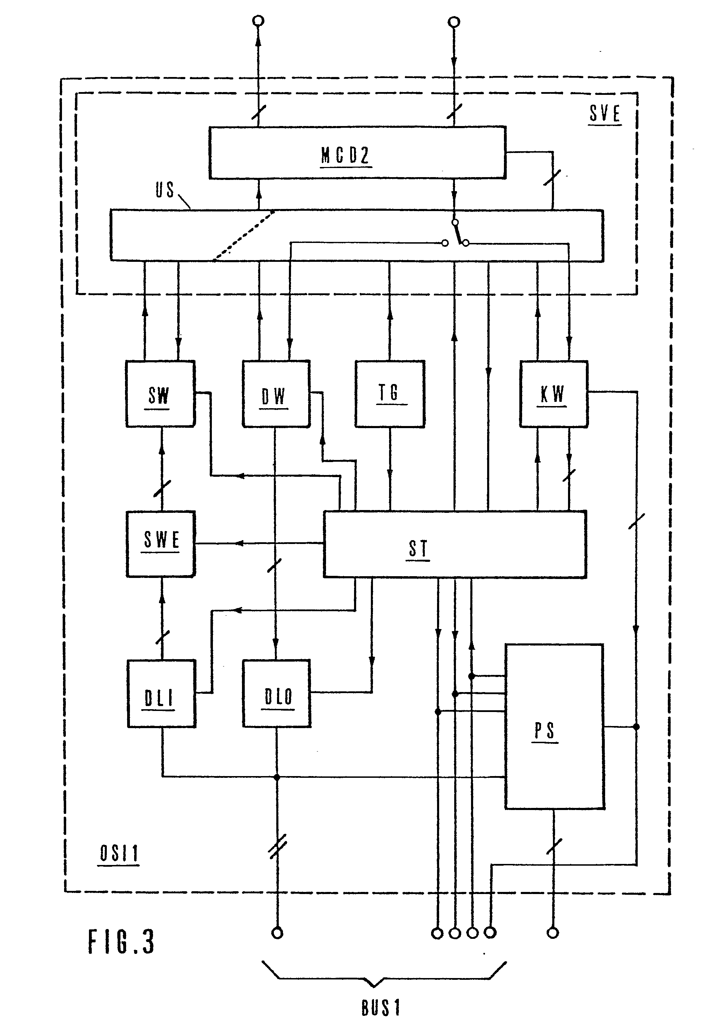

Die Untereinheit OSI1 nach Fig. 3 weist eine mit einer Steuerlogik ST verbundene Signalverarbeitungs-Einrichtung SVE auf, die mit einem Manchester-Umsetzer MCD2 und einer Umschaltstufe US versehen ist, die jeweils über eine Sammelleitung zum einen mit einem Schieberegister SW für Statuswörter, zum anderen mit einem Schieberegister DW für Datenwörter und zudem mit einem Schieberegister KW für Befehlswörter verbunden ist. Ein Taktgenerator TG liefert die Taktsignale für die Steuerlogik ST und für die Umschaltstufe US. Die Steuerlogik ST ist einerseits mit den Schieberegistern KW, DW und SW und andererseits mit einem Statuswort-Erzeuger SWE, einem Eingangs-Register DLI und einem Ausgangs-Register DLO verbunden. Diese Register weisen drei Zustände auf, nämlich „1", „0" und „hochohmig". Die Register sind miteinander über eine Sammelschiene oder Bus und mit einer Ein-Ausgabe-Schaltung PS (Port) verbunden. Dieser Bus weist 6 Adress-, 3 Steuer- und 8 bidirektionale Datenleitungen auf; mit ihm werden 8-Bit-breite dynamische Daten übertragen. Dabei werden Daten vom Eingangs-Register DLI über den Statuswort-Erzeuger SWE dem Schieberegister SW sowie Daten vom Schieberegister DW dem Ausgangs-Register DLO zugeführt. Das Schieberegister KW für Befehlswörter ist über eine Sammelleitung mit der Steuerlogik ST und über eine 6-Bit-Adressleitung mit der Ein-Ausgabe-Schaltung PS verbunden. Diese 6-Bit-Adressleitung bildet einen weiteren Ausgang der Untereinheit OSI1. Die Steuerlogik ST und die Ein-Ausgabe-Schaltung PS sind über drei Steuerleitungen, nämlich eine Lese-, eine Schreib- und eine Freigabeleitung, miteinander verbunden. Die Ein-Ausgabe-Schaltung PS weist 48 Ein- oder Ausgänge für die statischen Bitdaten auf. Die Untereinheiten OSI2 und OSI3 können gleich wie die Untereinheit OSI1 aufgebaut sein.

Das Bussystem gemäss Fig. 1 bis 3 funktioniert folgendermassen: Das Bussystem überträgt Daten von einem Zentralrechner in der Zentralstelle OS zu den Baugruppen BGI, BG2, BG3 und BG4 und umgekehrt. Diese Baugruppen befinden sich an ganz verschiedenen Orten und in sehr unterschiedlichen Entfernungen von der Zentralstelle OS. Die Datenübertragung erfolgt seriell und richtungsgetrennt. Die Untereinheiten OSI1, OSI2 und OSI3 sind nur durch je eine Zweidrahtleitung pro Richtung mit der Schnittstellenschaltung RAI verbunden.

Im Bussystem sind drei verschiedene Arten von Schnittstellen-Schaltungen vorhanden, nämlich einmal die Schnittstellenschaltung RAI, zum anderen die Untereinheiten OSI1, OSI2 und OSI3 und schliesslich die Wandler ADI1, ADI2 und ADI3.

Die Schnittstellenchaltung RAI bildet die Schnittstelle zum Zentralrechner und regelt den Datenverkehr zu den Baugruppen. Die Untereinheiten OSI1, OSI2 und OSI3 empfangen über die eine Zweidrahtleitung Daten von der Schnittstellenschaltung RAI und stellen sie als dynamische und statische Daten den ihnen zugeordneten Baugruppen BG1, BG2 und BG3 bzw. BG4 zur Verfügung. Umgekehrt ruft die Schnittstellenschaltung RAI über eine Untereinheit digitale Daten ab, die von der Baugruppe bereitgestellt werden, und sendet sie über die andere Zweidrahtleitung zur Schnittstellenschaltung RAI. Analoge Daten von einer Baugruppe werden vom Wandler ADI1, ADI2 bzw. ADI3 empfangen, in digitale Form umgewandelt und der Untereinheit OSI1, OSI2 bzw. OSI3 übergeben. Diese Wandler sind über die dynamischen Schnittstellen mit den ihnen zugeordneten Untereinheiten verbunden.

Die dynamische Schnittstelle besteht aus 6 Adressleitungen, 3 Steuerleitungen und 8 Datenleitungen, so dass die Datenübertragung nach dem bei Mikrocomputern üblichen Prinzip läuft. Die statischen Daten liegen immer an, das heisst, sie stehen immer zur Verfügung. Es sind 48 Bit, die von einer Untereinheit OSI1, OSI2 bzw. OSI3 entweder gesendet oder empfangen werden. Die Übertragungsrichtung wird von der Schnittstellenschaltung RAI während der Initialisierungsphase in der betreffenden Untereinheit OSI1, OSI2 bzw. OSI3 festgelegt. Es können beispielsweise 8-Bit-Wörter als Ausgangs- oder Eingangsinformation definiert werden.

Die Schnittstellenschaltung RAI weist eine Schnittstelle auf, an der der zwei Pufferspeicher aufweisende Puffer BU angeschlossen ist. Über den einen Pufferspeicher werden Daten von der Zentralstelle OS und über den anderen Daten von der Schnittstellenschaltung RAI empfangen. Der Datenaustausch zwischen der Zentralstelle OS und der Schnittstellenschaltung RAI geschieht daher richtungsgetrennt und ausserdem asynchron. Jeder Pufferspeicher hat eine Kapazität von 512 Byte.

Die Schnittstellenschaltung RAI nach Fig. 2 funktioniert folgendermassen:

Der Mikrocomputer MC steuert über die Schreibleitung den Sendespeicher und über die Leseleitung den Empfangsspeicher des Puffers BU (Fig. 1) und empfängt von diesem über die Freigabeleitung ein Quittungssignal, das angibt, welcher von den beiden Pufferspeichern frei oder besetzt ist. Die eigentlichen Daten werden über die 8-Bit-Leitungen geführt. Der Mikrocomputer MC holt zu gegebener Zeit die Daten aus dem Puffer BU (Fig. 1) und übergibt sie zusammen mit einem Befehlswort dem Parallel-Serien-Wandler PSW. Sobald ein Startzeichen vom Mikrocomputer MC über die Kontroll-Logik SKL zum Wandler PSW gelangt, beginnt dieser Daten seriell zum Manchester-Umsetzer MCD1 zu senden, der zusätzlich an seinem Ausgang ein Manchester-codiertes Synchronbit abgibt, das besagt, ob die folgenden Bits den Charakter von Daten- oder Befehlswörtern haben. Das Befehlswort enthält nicht nur Adressen, sondern auch eine Angabe darüber, ob die Schnittstellenschaltung RAI Daten senden oder erhalten soll.

Im ersten Fall gibt zunächst das Befehlswort die Adressen und den Befehl an, dass Daten gesendet werden sollen, und gelangt dann beispielsweise in die Untereinheit OSI1 (Fig. 3). Dieser Befehl wirkt derart über die Kontroll-Logik SKL, dass die eigentlichen Daten über den Parallel-Serien-Wandler PSW dem Manchester-Umsetzer MCD1 zugeführt werden, der die binär codierten, seriellen Daten Manchester-codiert jeweils über einen der im Koppler KP vorhandenen Treiber TR zu einer Untereinheit (Fig. 3) mit einer Datenrate von beispielsweise 1,25 Mbit sendet. Dabei bildet die Schnittstellenschaltung RAI selbst einen Puffer, in dem Daten warten können, da der 8-Bit-Datenfluss kein dauernder Datenstrom ist, sondern sporadisch vom Mikrocomputer gesendet oder geholt wird. Ausserdem werden die richtigen Ausgänge der Schnittstellenschaltung RAI für die gewünschte Untereinheit OSI1, OSI2 bzw. OSI3 umgeschaltet.

Im zweiten Fall, wenn Daten empfangen werden sollen, wird auch ein Befehlswort abgegeben, das sowohl eine Adresse als auch ein Steuerbit enthält. Das Steuerbit gibt den Befehl, dass Daten empfangen werden sollen. Die Dateninformation wird in der Untereinheit in einem Statuswort abgelegt und an die Koppelschaltung KPS zurückgesendet, wo die Wörter serien-parallel gewandelt und über den Mikrocomputer MC dem Puffer BU (Fig. 1) zugeführt werden. Der Manchester-Umsetzer MCD1 weist im Gegensatz zum Mikrocomputer MC keine Speicherkapazität auf.

Der Mikrocomputer analysiert dieses Statuswort und stellt fest, ob es Fehlermeldungen oder Daten enthält. Die Fehlermeldung gibt zum Beispiel an, ob das Paritätsbit falsch gesetzt ist, oder ob die Baugruppe nicht aktiv ist, das heisst, nicht unter Spannung steht. In diesem Fall sendet sie keine Quittung zurück, was als Fehlermeldung interpretiert wird.

In einem Radarsystem besteht ein Problem darin, dass die Daten sehr unterschiedliche Geschwindigkeiten aufweisen, da sich einige Daten sehr schnell und andere sehr langsam ändern. Es wäre daher sinnlos, beispielsweise mit einer Frequenz von 1 kHz Daten abzufragen, die nur alle Sekunden ändern, weil man dadurch 1000mal denselben Wert abfragen und zugleich die Verarbeitung anderer Daten blockieren würde.

Darum ist im Mikrocomputer eine Regelschleife vorgesehen, um Baugruppen, die einen schnellen Datenfluss liefern, oft und Baugruppen, die einen langsamen Datenfluss liefern, weniger oft abzufragen. Dies kann man beim Mikrocomputer durch entsprechende Programmierung erreichen.

Die Schaltung nach Fig. 3 funktioniert folgendermassen:

Die von der Schnittstellenschaltung RAI (Fig. 1) in der einen Richtung ankommenden Daten werden im Manchester-Umsetzer MCD2 in einem Binär-Code decodiert und zum Befehlswort-Schieberegister KW weitergeleitet, und zwar dann, wenn das zuerst im Manchester-Code gesendete Befehlsbit ein Befehlswort anzeigt. Das Schieberegister KW wird von der Umschaltstufe US gesteuert und das von ihm abgegebene Befehlswort aufgeteilt und ein Teil davon sowohl einem entsprechenden Eingang der Ein-Ausgabe-Schaltung PS als auch zum Adressausgang der Untereinheit OSI1 und ein anderer Teil davon der Steuerlogik ST zugeführt. Dabei wird die Adresse der Untereinheit OSI1 mit einer festverdrahteten Adresse verglichen.

Die Steuerlogik ST überprüft auch das Bit, welches angibt, ob nachfolgend Daten kommen, oder ob die Koppelschaltung KPS Daten von der Baugruppe empfangen soll. Sind nachfolgend Daten angekündigt, so wird gewartet, bis ein Manchester-codierter Datenstrom in den Manchester-Umsetzer MCD2 gelangt, der daraufhin ein Datenwort abgibt. Der Datenstrom wird in das als Serien-Parallel-Wandler arbeitende Datenwort-Schieberegister DW geladen und parallel dem Ausgangs-Register DLO weitergegeben, wo die Daten für eine gewisse Zeit anliegen, während der die Steuerlogik ST einen Schreibimpuls an die Baugruppe sendet, die ihn quittiert, worauf die Steuerlogik ST das Ausgangs-Register DLO zur Übergabe der dynamischen Daten über den Bus steuert. Danach wird die Schreibleitung wieder auf „1" gesetzt und ein Statuswort erzeugt, das als Ausdruck einer richtigen Übermittlung der dynamischen Daten zur Koppelschaltung KPS (Fig. 2) zurückgesendet wird. In der anderen Richtung werden die dynamischen Daten von der Baugruppe zur Koppelschaltung KPS gesendet. Zu diesem Zweck erhält das Schieberegister KW ein Befehlswort mit einem Bit, das angibt, dass Daten von der Baugruppe empfangen werden sollen. Daraufhin beginnt die Steuerlogik ST die Leseleitung zur Baugruppe hin zu aktivieren. Dadurch werden die Daten der Baugruppe auf den Bus abgegeben, die über das Eingangs-Register DLI zum Statuswort-Erzeuger SWE gelangen, von wo aus sie über das als Parallel-Serien-Wandler arbeitende, von der Steuerlogik aktivierte Schieberegister SW und über die Umschaltstufe US zum Manchester-Umsetzer MCD2 und danach zur Schnittstellenschaltung RAI (Fig. 1) geführt werden.

Die statischen Daten werden beispielsweise 8-Bit-blockweise über die Ein-Ausgabe-Schaltung PS gesendet bzw. empfangen, die von der Steuerlogik ST gesteuert ist. Der Verlauf der statischen Daten in der einen Richtung, das heisst von der als Verteiler arbeitenden Koppelschaltung KPS zu den Baugruppen, geschieht in der Weise, dass zuerst Adresswörter von der Koppelschaltung KPS ausgesendet werden, die an die Ein-Ausgabe-Schaltung PS gelangen. Daraufhin gelangen Datenwörter wiederum von der Koppelschaltung KPS über denselben Weg bis zur Ein-Ausgabe-Schaltung PS, wo sie abgelegt werden und so lange erhalten bleiben, bis sie überschrieben werden. Entsprechendes gilt für den Datenfluss in der anderen Richtung. Auch in diesem Fall werden zuerst Adresswörter gesendet. Die statischen Daten der Ein-Ausgabe-Schaltung PS werden vom Eingangs-Register DLI gelesen und in derselben Art und Weise wie die dynamischen Daten zurück zu der Koppelschaltung KPS gesendet. Die 48 Bit am Ausgang der Schaltung PS ensprechen 6 Byte. Mit 3 von den 6 vom Schieberegister KW gelieferten Bits, die an einem Eingang der Schaltung PS vorliegen, wählt man eines von diesen 6 Byte aus. Mit den erwähnten 6 Bit können 64 Adressen erzeugt werden, von denen 6 zur Auswahl und 2 zur Programmierung der Ein-Ausgänge verwendet werden. Die Schaltung PS weist 6 Ein-Ausgänge zu je 8 Bit auf, und man kann die über das Ausgangs-Register DLO ankommenden Daten entweder an den 8-Bit-Ein-Ausgang 1 oder an einen der anderen 8-Bit-Ein-Ausgänge 2 bis 6 adressieren.

Die Baugruppen BG1, BG2, BG3, BG4 (Fig. 1) liefern digitale Daten aus verschiedenen Hardware-Schaltungen direkt über die Untereinheiten OSI1, OSI2 bzw. OSI3 zur Zentralstelle OS und umgekehrt.

Bei den statischen digitalen Daten handelt es sich um Zustandssignale, die von den Baugruppen als einzelne Bits übernommen werden. Hingegen werden Daten, die 8-Bit-blockweise ankommen, dynamisch behandelt, um Eingänge zu sparen, die sonst wegen der grossen Anzahl Bits erforderlich wären. In Fig. 1 sind willkürlich zwei Baugruppen BG3 und BG4 geschaltet. Man könnte auch mehr Baugruppen schalten, weil nicht die Baugruppen selbst, sondern die Daten, die sie liefern, wichtig sind.

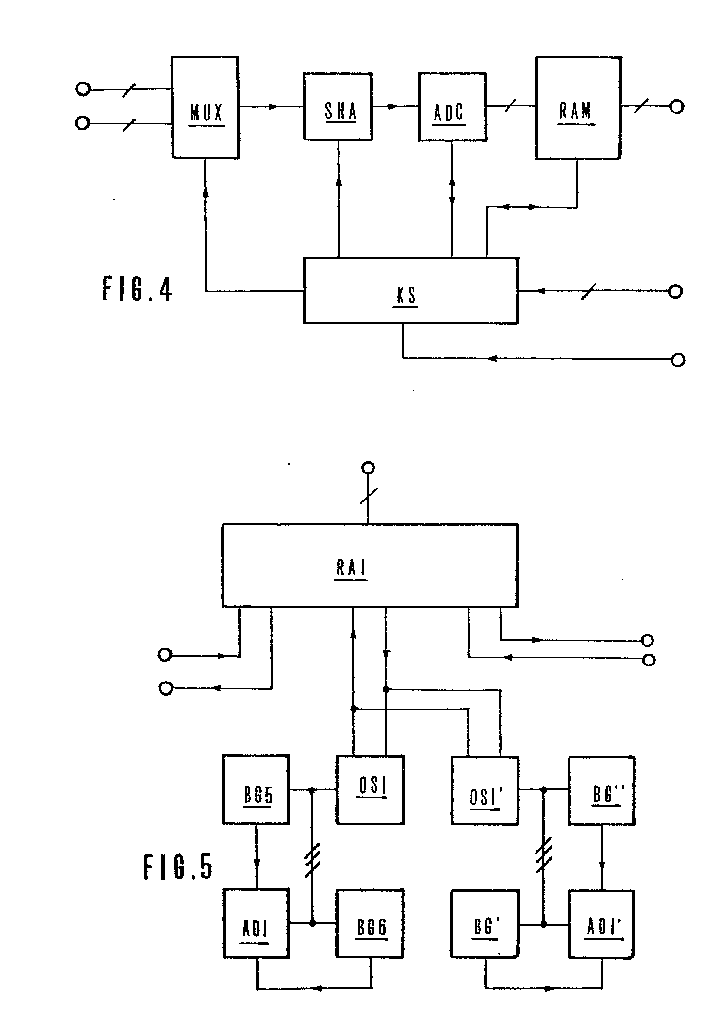

Der Wandler nach Fig. 4 ist im Prinzip ein Analog/Digital-Wandler, der einen Multiplexer MUX, einen Abtast-Halte-Verstärker SHA, einen Analog/Digital-Umsetzer ADC und einen Randomspeicher RAM aufweist, die in Reihe geschaltet und jeweils von einer Kontrollschaltung KS gesteuert sind. Der Multiplexer MUX ist mit Differentialeingängen für 8 Kanäle und mit einfachen Eingängen für 16 Kanäle und der Randomspeicher RAM mit Ausgängen für 8-Bit-Daten versehen. Zur Kontrollschaltung KS führen beispielsweise 6 Adress- und 3 Steuerleitungen auf Sammelleitungen sowie eine weitere Stoppbefehlleitung.

Der Wandler nach Fig. 4 ist nur notwendig, wenn die Baugruppen nicht nur digitale, sondern auch analoge Daten liefern. In diesem Fall muss man die Daten zuerst digital umwandeln. Die Kontrollschaltung KS ist mit einem Mikroprozessor aufgebaut. Der Randomspeicher RAM dient als Puffer, um die Zugriffszeit von der Untereinheit her zu verkürzen. Die Analogdaten werden nämlich zuerst im Multiplexer MUX multiplexiert, dann über den Abtast-Halte-Verstärker SHP und den Analog/Digital-Umsetzer ADC codiert und in den Randomspeicher RAM abgelegt. Die Daten können dann aus dem Randomspeicher viel schneller abgeholt werden, als wenn sie jeweils vorerst umgewandelt werden müssten.

Auch die Manchester-Umsetzer MCD1 und MCD2 sind für die Arbeitsweise des Bussystems nicht unbedingt notwendig. Man kann nämlich ohne weiteres einfache Manchester-Codierer-Decodierer oder Codierer-Decodierer anderer Art oder gar keine vorsehen. Der Vorteil eines Manchester-Codierer-Decodierers ist, dass die Signale keine Gleichspannungskomponente aufweisen. Zudem kann noch eine galvanische Trennung mit Hilfe eines Übertragers erreicht werden. Handelsübliche Manchester-Umsetzer sind normalerweise mit einer zusätzlichen Schaltung versehen, die ein Paritätsbit abgibt, das zur Überwachung des Datenverkehrs verwendet werden kann. Dabei wird ein vom Manchester-Umsetzer MCD1 abgegebenes Paritätsbit im Manchester-Umsetzer MCD2 empfangen, vom ihm überprüft und zur Steuerlogik ST weitergeführt, wobei die Steuerlogik eine Rückmeldung an den Statuswort-Erzeuger SWE gibt, wenn das Paritätsbit falsch ist. Die Rückleitung von der Steuerlogik ST über die Umschaltstufe US zum Manchester-Umsetzer MCD2 betrifft den Decodierer oder Rückumsetzer, der die von den Baugruppen kommenden Daten umwandelt. Damit wird angegeben, dass Daten bereit stehen, worauf der Rückumsetzer zu arbeiten beginnt. Für die von der Zentralstelle kommenden Daten geht eine Meldung vom Manchester-Umsetzer MCD2 zur Steuerlogik ST, um eines der Schiebe-Register DW oder KW zu aktivieren.

Die Register DLI und DLO sind an sich nicht notwendig, wenn der Statuswort-Erzeuger SWE und das Datenwort-Schieberegister DW derart aufgebaut sind, dass deren Ein- bzw. Ausgänge auch einen hochhohmigen Zustand aufweisen können. Das Vorhandensein der Register DLI und DLO ermöglicht aber eine Selbstüberwachung der Schaltung. Dies geschieht folgendermassen: Die Daten, die auf eine bestimmte Adresse hinausgesendet werden, werden im Ausgangs-Register DLO gehalten. Das Register übergibt dem Bus die Daten für eine bestimmte Adresse, sobald auf dieser Adresse wieder gelesen wird. Nach dem Einlesen der Daten über den D-Eingang des Registers werden die Daten zurückgesendet, worauf die Ausgänge wieder in den hochohmigen Zustand gelangen. Da die Daten, die gehalten werden, wieder gelesen werden, ergibt sich eine Spiegelung der Daten, was ein Testen derselben erlaubt.

Schliesslich sei noch bemerkt, dass das Bussystem zwei über dieselben Leitungen mit der Schnittstellenschaltung RAI verbundene Untereinheiten OSI und OSI' aufweisen kann, wie es in Fig. 5 dargestellt ist. Dabei kann auch der Mikrocomputer MC in der Schnittstellenschaltung RAI (Fig. 2) mit mehreren Koppelschaltungen verbunden sein.

## Patentansprüche

1. Bussystem zum Austausch von Daten zwischen einer Zentralstelle (OS) und mindestens zwei Baugruppen, die über je einer Untereinheit (z. B. OSI1, OSI2) an eine Schnittstellenschaltung (RAI) angeschlossen sind, die auch mit der Zentralstelle (OS) verbunden ist und eine Multiplexer-Einheit, eine Pufferschaltung und einen Koppler (KP) aufweist, wobei die Untereinheiten als sekundäre Schnittstellenschaltungen arbeiten, dadurch gekennzeichnet, dass die Multiplexer-Einheit durch einen den Koppler (KP) steuernden Mikrocomputer (MC) und der Puffer durch einen Parallel-Serien-Wandler (PSW) und einen Serien-Parallel-Wandler (SPW) gebildet sind, wobei der Austausch der Daten zwischen dem Mikrocomputer (MC) und dem Koppler (KP) in der einen Richtung über den Parallel-Serien-Wandler (PSW) und in der anderen Richtung über den Serien-Parallel-Wandler (SPW) erfolgt, und dass der Koppler (KP) über getrennte Leitungen jeweils an je eine in den Untereinheiten (z. B. OSI1, OSI2) vorgesehene Umschaltstufe (US) angeschlossen ist, die über eine Steuerlogik (ST) einen Statuswort-Erzeuger (SWE) und ein Datenwort-Schieberegister (DW) derart steuert, dass die Daten der Umschaltstufe (US) über das Datenwort-Schieberegister (DW) zu einem mit der Baugruppe verbundenen Bus und die Daten von der Baugruppe (z. B. BG1) über diesen Bus und den ihm angeschlossenen Statuswort-Erzeuger (SWE) zu der Umschaltstufe (US) geführt werden, wobei zwischen einer der Abzweigungen der Umschaltstufe (US) und dem Ausgang des Statuswort-Erzeugers (SWE) ein Statuswort-Schieberegister (SW) und zwischen einer der anderen Abzweigungen und der Steuerlogik (ST) ein Befehlswort-Schieberegister (KW) eingefügt ist.

2. Bussystem nach Anspruch 1, dadurch gekennzeichnet, dass der Koppler (KP) in der Schnittstellenschaltung (RAI) und die Umschaltstufe (US) in der Untereinheit je eine Codierer-Decodierer-Einheit aufweisen, um jeweils die Daten vor deren Verteilung oder nach deren Konzentrierung zu codieren bzw. decodieren.

3. Bussystem nach Anspruch 2, dadurch gekennzeichnet, dass die Codierer-Decodierer-Einheiten Manchester-Umsetzer (MCD1 bzw. MCD2) sind.

4. Bussystem nach einem der Ansprüche 1 bis 3, dadurch gekennzeichnet, dass in der Unterein-

heit (OSI1, OSI2 bzw. OSI3) der Austausch von statischen Daten über eine Ein-Ausgabe-Schaltung (PS) erfolgt, die mit dem Bus (BUS1) verbunden ist.

5. Bussystem nach einem der Ansprüche 1 bis 4, dadurch gekennzeichnet, dass zwischen der Zentralstelle (OS) und dem Mikrocomputer (MC) ein Puffer (B) mit je einem Pufferspeicher für beide Datenflussrichtungen eingefügt ist.

6. Bussystem nach einem der Ansprüche 1 bis 5, dadurch gekennzeichnet, dass zwischen dem Bus und dem Eingang des Statuswort-Erzeugers (SWE) ein Eingangs-Register (DLI) und zwischen dem Bus und dem Ausgang des Datenwort-Schieberegisters (DW) ein Ausgangs-Register (DLO) eingeführt sind.

7. Bussystem nach einem der Ansprüche 1 bis 6, dadurch gekennzeichnet, dass in einer Schnittstellenschaltung (RAI) der Mikrocomputer (MC) mit mehreren Koppelschaltungen (KPS) verbunden ist.

8. Bussystem nach einem der Ansprüche 1 bis 7, dadurch gekennzeichnet, dass mindestens zwei Untereinheiten (OSI, OSI') über dieselben Leitungen mit der Schnittstellenschaltung (RAI) verbunden sind.

9. Bussystem nach einem der Ansprüche 1 bis 8, dadurch gekennzeichnet, dass mindestens in den Statuswörtern einer Untereinheit (OSI1, OSI2 bzw. OSI3) Daten und Fehlermeldungen geliefert werden.

10. Bussystem nach einem der Ansprüche 1 bis 9, dadurch gekennzeichnet, dass mindestens zwischen einer Baugruppe (z. B. BG1) und einer Untereinheit (ADI) ein Analog/Digital-Wandler (ADI1, ADI2 bzw. ADI3) eingefügt ist.

## Claims

1. A bus system for the exchange of data between a central station (OS) and at least two assemblies which are each connected via a subsidiary unit (e.g. OSI1, OSI2) to an interface circuit (RAI) which is also connected to the central station (OS) and is provided with a multiplexer unit, a buffer circuit and a coupler (KP), where the subsidiary units operate as secondary interface circuits, characterised in that the multiplexer unit is formed by a microcomputer (MC) which controls the coupler (KP), and the buffer is formed by a parallel-series converter (PSW) and a series-parallel converter (SPW), where the exchange of the data between the microcomputer (MC) and the coupler (KP) takes place in the one direction via the parallel-series converter (PSW) and in the other direction via the series-parallel converter (SPW), and that the coupler (KP) is connected via separate lines to a switching stage (US) which is provided in the subsidiary units (e.g. OSI1, OSI2) and which, via a control logic (ST), controls a status word generator (SWE) and a data word shift register (DW) in such manner that the items of data from the switching stage (US) are fed via the data word-shift register (DW) to a bus which is connected to the assembly, and the items of data from the assembly (e.g. BG1)) are fed via this bus and via the status word generator (SWE) connected thereto, to the switching stage (US), where a status word shift register (SW) is interposed between one of the branches of the switching stage (US) and the output of the status word generator (SWE), and a command word shift register (KW) is interposed between one of the other branches and the control logic (ST).

2. A bus system as claimed in Claim 1, characterised in that the coupler (KP) in the interface circuit (RAI) and the switching stage (US) in the subsidiary unit each have a coder-decoder unit in order that the items of data can be coded and decoded prior to their distribution or following their concentration.

3. A bus system as claimed in Claim 2, characterised in that the coder-decoder units are Manchester converters (MCD1 and MCD2).

4. A bus system as claimed in one of the Claims 1 to 3, characterised in that in the subsidiary unit (OSI1, OSI2 and OSI3) the exchange of static data takes place via an input-output circuit (PS) which is connected to the bus (BUS1).

5. A bus system as claimed in one of the Claims 1 to 4, characterised in that a buffer (B) having a buffer store for each of the two data flow directions is interposed between the central station (OS) and the microcomputer (MC).

6. A bus system as claimed in one of the Claims 1 to 5, characterised in that an input register (DLI) is interposed between the bus and the input of the status word generator (SWE), and an output register (DLO) is interposed between the bus and the output of the data word shift register (DW).

7. A bus system as claimed in one of the Claims 1 to 6, characterised in that in an interface circuit (RAI) the microcomputer (MC) is connected to a plurality of coupling circuits (KPS).

8. A bus system as claimed in one of the Claims 1 to 7, characterised in that at least two subsidiary units (OSI, OSI') are connected to the interface circuit (RAI) via the same lines.

9. A bus system as claimed in one of the Claims 1 to 8, characterised in that data and fault messages are supplied at least in the status words of one subsidiary unit (OSI1, OSI2, OSI3).

10. A bus system as claimed in one of the Claims 1 to 9, characterised in that an analogue-digital converter (ADI1, ADI2 and ADI3) is interposed at least between one assembly (e.g. BG1) and one subsidiary unid (ADI).

## Revendications

1. Système de bus pour l'échange de données entre un poste central (OS) et au moins deux modules, dont chacun est relié par l'intermédiaire d'un sous-ensemble (par exemple OSI1, OSI2) à un circuit d'interface (RAI) qui est également relié au poste central (OS) et comporte une unité de multiplexage, un circuit tampon et un coupleur (KP), les sous-ensembles fonctionnent en tant que circuits d'interface secondaires, caractérisé par le fait que l'unité de multiplexage est formée par un micro-ordinateur (MC) commandant le coupleur (RP) et que le tampon est formé par un convertisseur parallèle-série (PSW) et par un convertisseur série-parallèle (SPW), l'échange des données entre le micro-ordinateur (MC) et le coupleur (KP) s'effectuant dans un sens par l'intermédiaire du convertisseur parallèle-série (PSW) et dans l'autre sens par l'intermédiaire du convertisseur-série (SPW), et que le coupleur (KP) est relié par l'intermédiaire de lignes séparées respectivement à un étage de commutation (US) prévu dans chacun des sous-ensembles (par exemple OSI1, OSI2) et qui commande, par l'intermédiaire d'un circuit logique de commande (ST), un générateur de mots d'état (SWE) et un registre à décalage de mots de données (DW) de telle sorte que les données de l'étage de commutation (US) sont envoyées par l'intermédiaire du registre à décalage de mots de données (DW) à un bus relié au module et que les données du module )par exemple BG1) sont envoyées à l'étage de commutation (US) par l'intermédiaire de ce bus et du générateur de mots d'état (SWE) qui lui est relié, et qu'un registre à décalage de mots d'état (SW) est inséré entre une des dérivations de l'étage de commutation (US) et la sortie du générateur de mots d'état (SWE) et qu'un registre à décalage de mots d'instructions (KW) est inséré entre l'une des autres dérivations et le circuit logique de commande (ST).

2. Système de bus suivant la revendication 1, caractérisé par le fait que le coupleur (KP) et l'étage de commutation (US) comportent chacun, dans le circuit d'interface (RAI) et dans le sous-ensemble, respectivement une unité de codage-décodage afin de coder ou de décoder respectivement les données avant leur répartition ou après leur concentration.

3. Système de bus suivant la revendication 2, caractérisé par le fait que les unités de codage-décodage sont des convertisseurs à code Manchester (MCD1 ou MCD2).

4. Système de bus suivant l'une des revendications 1 à 3, caractérisé par le fait que, dans le sous-ensemble (OSI1, OSI2 ou OSI3), l'échange de données statistiques s'effectue par l'intermédiaire d'un circuit d'entrée-sortie (PS), qui est relié au bus (BUS1).

5. Système de bus suivant l'une des revendications 1 à 4, caractérisé par le fait qu'un tampon (B) comportant une mémoire tampon pour chacune des deux directions du flux de données est inséré entre le poste central (OS) et le micro-ordinateur (MC).

6. Système de bus suivant l'une des revendications 1 à 5, caractérisé par le fait qu'un registe d'entrée (DLI) est inséré entre le bus et l'entrée du générateur de mots d'état (SWE) et qu'un registre de sortie (DLO) est inséré entre le bus et la sortie du registre à décalage de mots de données (DW).

7. Système de bus suivant l'une des revendications 1 à 6, caractérisé par le fait que dans un circuit d'interface (RAI) le micro-ordinateur (MC) est relié à plusieurs circuits de couplage (KPS).

8. Système de bus suivant l'une des revendications 1 à 7, caractérisé par le fait qu'au moins deux sous-ensembles (OSI, OSI') sont reliés par l'intermédiaire de ces mêmes lignes au circuit d'interface (RAI).

9. Système de bus suivant l'une des revendications 1 à 8, caractérisé par le fait que des données et des signalisations d'erreurs sont délivrées au moins dans les mots d'état d'un sous-ensemble (OSI1, OSI2 ou OSI3).

10. Système de bus suivant l'une des revendications 1 à 9, caractérisé par le fait que le convertisseur analogique-numérique (ADI1, ADI2 ou ADI3) est inséré au moins entre un module (par exemple BG1) et un sous-ensemble (ADI).

FIG.1

0 069 829

FIG.2

11

0 069 829

FIG.3

BUS 1

13

FIG.4

FIG.5